# EUROPÄISCHE PATENTSCHRIFT

(11) **EP 3 072 632 B1**
(45) Veröffentlichungstag und Bekanntmachung des Hinweises auf die Patenterteilung: **12.09.2018**
(21) Anmeldenummer: 16000614.4
(22) Anmeldetag: 15.03.2016
(51) Int. Cl.: B23Q 1/01

(54) **WERKZEUGREVOLVER**
TOOL REVOLVER
TOURELLE REVOLVER

(30) Priorität: 26.03.2015 DE 102015003878
(43) Veröffentlichungstag der Anmeldung: 28.09.2016
(73) Patentinhaber: Sauter Feinmechanik GmbH, 72555 Metzingen (DE)
(72) Erfinder: Günther, Schips, 72793 Pfullingen (DE)
(74) Vertreter: Bartels und Partner, Patentanwälte

(56) Entgegenhaltungen:
- DE-A1- 4 308 419
- DE-U1- 29 823 496

## Beschreibung

Die Erfindung betrifft einen Werkzeugrevolver, mit einer in wahlweise Schwenkstellungen gegenüber einem Ständerteil bringbaren Werkzeugscheibe, wobei das Ständerteil zumindest aufweist: einen Grundkörper, der eine Schwenklagerung für die Werkzeugscheibe beinhaltet; eine Lagerplatte, auf der ein Schwenkantrieb in Form eines Elektromotors für die Werkzeugscheibe gelagert ist; ein Getriebegehäuseteil, das eine für einen Antrieb eines Bearbeitungswerkzeugs vorgesehene Getriebeverbindung beinhaltet; und eine Motorplatte, die einen Träger für einen weiteren Elektromotor bildet, der für den Antrieb des jeweiligen Bearbeitungswerkzeuges mittels der Getriebeverbindung vorgesehen ist.

Werkzeugrevolver dieser Art sind Stand der Technik. Die um eine Revolverachse schwenkbare Werkzeugscheibe weist in gleichen Winkelabständen voneinander verteilt am Umfang angeordnete Werkzeugstationen auf, die durch Drehen der Werkzeugscheibe jeweils in mindestens eine Arbeitsposition einstellbar sind. Die Werkzeugstationen, beispielsweise zwölf an der Zahl, weisen eine Werkzeugaufnahme für Bearbeitungswerkzeuge auf, bei denen es sich insbesondere um rotierende Werkzeuge zur spanenden Bearbeitung von Werkstücken handelt, beispielsweise um Bohr- oder Fräswerkzeuge. Das Ständerteil, an dem die Werkzeugscheibe um die Revolverachse drehbar gelagert ist, weist neben einem Grundkörper einen auf einer Lagerplatte angebrachten Schwenkantrieb für die Werkzeugscheibe und einen auf einer Motorplatte gelagerten Antriebsmotor auf, der über ein am Grundkörper gelagertes Getriebegehäuseteil einen Drehantrieb für ein rotierendes Bearbeitungswerkzeug bildet, das sich in der jeweiligen, auf die Arbeitsposition ausgerichteten Werkzeugaufnahme der Werkzeugscheibe befindet und über eine Kupplungseinrichtung, die sich im Getriebegehäuseteil befindet, mit dem betreffenden Bearbeitungswerkzeug in Kupplungseingriff gelangt.

Die unterschiedlichen Funktionen, die beim Bearbeitungsbetrieb des Werkzeugrevolvers auf das Ständerteil entfallen, wie Ausbilden der Lagerung der Werkzeugscheibe am Grundkörper, Schwenkantrieb der Werkzeugscheibe, Werkzeugantrieb der Bearbeitungswerkzeuge über zugehöriges Getriebe mit Kupplungseinrichtung an der Arbeitsposition, führen bei den bekannten Werkzeugrevolvern zu einem sperrigen Aufbau des Ständerteils. In Verbindung mit den weiteren, betrieblich erforderlichen Komponenten, wie Verriegelungseinrichtung zum Festlegen der Werkzeugscheibe in den ausgerichteten Schwenkstellungen, sowie den für die Funktionskomponenten erforderlichen Steuer- und Versorgungseinrichtungen, ergeben sich für die Werkzeugrevolver hohe Herstellkosten, auch bedingt durch erheblichen Montageaufwand.

Durch DE 43 08 419 ist ein Werkzeugrevolver bekannt mit
- einem Gehäuse
- einer in wählbare Winkelstellungen drehbaren sowie in diesen mit dem Gehäuse verriegelbaren Werkzeugscheibe, die Aufnahmen für Werkzeughalter aufweist, von denen jeweils eine sich in einer Arbeitsposition befindet,
- einer mittels eines Motors antreibbaren Kupplungswelle, auf welche die sich in der Arbeitsposition befindende Aufnahme ausgerichtet ist,
- einem Werkzeughalter mit einem in wenigstens eine der Aufnahmen eingreifenden Verbindungsteil und einem relativ zu diesem und der Werkzeugscheibe beweglichen Trägerteilt, in dem eine Abtriebswelle gelagert ist, die in Getriebeverbindung mit einer im Verbindungsteil gelagerten, mit der Kupplungswelle kuppelbaren Zwischenwelle steht und mit welcher ein in eine Werkzeugaufnahme des Trägerteils eingesetztes, im Betreibe rotierendes Werkzeug kuppelbar ist, und
- einer motorisch antreibbaren Verstellvorrichtung für eine Bewegung des Trägerteils relativ zum Verbindungsteil, wobei der Trägerteil schwenkbar im Verbindungsteil gelagert ist.

Ein weiterer Werkzeugrevolver geht aus DE 298 23 496 U1 hervor.

Ausgehend von diesem Stand der Technik stellt sich die Erfindung die Aufgabe, einen Werkzeugrevolver zur Verfügung zu stellen, der kostengünstig herstellbar ist und sich durch einen kompakten Aufbau auszeichnet.Erfindungsgemäß ist diese Aufgabe durch einen Werkzeugrevolver gelöst, der die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass zumindest der Grundkörper, das Getriebegehäuseteil sowie die Lager- und die Motorplatte zu einem gemeinsamen, einstückigen Gehäuse zusammengefasst sind. Dadurch, dass dergestalt das Ständerteil ein einteiliges Gesamtgehäuse aufweist, das mehrere Hauptkomponenten, wie den die Schwenklagerung der Werkzeugscheibe ausbildenden Grundkörper, die Lagerung für den Schwenkantrieb sowie die für den Werkzeugantrieb vorgesehenen Komponenten der Motorplatte und der dem Werkzeugantrieb zugeordneten Getriebeeinheit umfasst, ist der erfindungsgemäße Werkzeugrevolver in kompakter, gedrungener Bauweise realisierbar. Das einteilige Hauptgehäuse ist einfach zu bearbeiten und lässt sich einfach montieren.

Der erfindungsgemäße Werkzeugrevolver ist dadurch kostengünstig herstellbar und somit für eine Produktion in hohen Stückzahlen besonders geeignet. Dank der einteiligen Ausbildung des Hauptgehäuses ist der Werkzeugrevolver im Betrieb auch schwingungsfest und für Hochleistungsbearbeitung mit hoher Bearbeitungsgenauigkeit besonders geeignet.

Das einstückig ausgebildete Gehäuse umfasst Teile des Antriebsstranges zum Schwenken der Werkzeugscheibe sowie eine Verriegelungseinrichtung zum Freigeben und Festlegen der Werkzeugscheibe in definiert vorgebbaren Schwenkstellungen gegenüber dem Ständerteil. Eine derartige Verriegelungseinrichtung kann in der bei Werkzeugrevolvern an sich bekannten Art und Weise ausgebildet und vorzugsweise hydraulisch betätigbar sein.

Das einstückig ausgebildete Gehäuse ist, soweit es den Antriebsstrang zum Schwenken der Werkzeugscheibe umfasst, in der Art eines Gehäusetopfes ausgebildet. In der zur Revolverachse koaxialen Innenseite des zur Werkzeugscheibe hin offenen Topfes kann die Schwenkwelle der Werkzeugscheibe gelagert sein.

Das einstückig ausgebildete Gehäuse kann in seinem Getriebegehäuseteil ein Übersetzungsgetriebe umfassen, das von einem Elektromotor angetrieben dem rotierenden Antrieb eines Bearbeitungswerkzeugs dient, das mittels der Werkzeugscheibe in eine dahingehende Arbeitsposition bringbar ist. Dabei kann der jeweilige Elektromotor für das jeweilige in der Arbeitsposition befindliche Bearbeitungswerkzeug und/oder für den Schwenkantrieb der Werkzeugscheibe von außen direkt auf das einstückig ausgebildete Gehäuse aufgesetzt sein.

Bei besonders vorteilhaften Ausführungsbeispielen verbreitert sich der Gehäusetopf in Richtung der schwenkbaren Werkzeugscheibe flanschartig, und innerhalb dieser ein Getriebegehäuseteil bildenden flanschartigen Verbreiterung ist das Übersetzungsgetriebe für das antreibbare Bearbeitungswerkzeug aufgenommen.

Außenumfangsseitig kann der Gehäusetopf eine Längsausnehmung aufweisen, in die zumindest teilweise der Elektromotor für den Antrieb des Bearbeitungswerkzeugs eingreift. Dadurch ist eine schlanke Gestaltung der Außenform des Gesamtgehäuses möglich, so dass für den Gesamtrevolver eine besonders kompakte Bauweise realisierbar ist.

Mit Vorteil kann hierbei die Anordnung so getroffen sein, dass die Längsausnehmung des Gehäusetopfes sich zwischen der einstückig mit dem Gehäuse verbundenen Motorplatte, die an die flanschartige Verbreiterung des Gehäuses anschließt, und einer Austriftsstelle im Gehäuse erstreckt, an die eine Gehäuseverlängerung anschließt, die zumindest Getriebeteile des Antriebsstranges für die Werkzeugscheibe beinhaltet.

Die flanschartige Verbreiterung des einstückig ausgebildeten Gehäuses kann im Wesentlichen kreisförmig und der Gehäusetopf sowie die Gehäuseverlängerung können mehreckig, insbesondere in der Art eines quadratischen Vielecks, aufgebaut sein. Dabei kann die kreisförmige Außenform der flanschartigen Gehäuseverbreiterung in etwa die Kontur des Außenumfangs der Werkzeugscheibe fortsetzen.

In vorteilhafter Weise kann der Gehäusetopf in einer Längsausrichtung einstückig an ihm angegossene Längsstege mit Ausnehmungen aufweisen, die zum Festlegen des einstückig ausgebildeten Gehäuses an Teilen einer Werkzeugmaschine vorgesehen sind.

Das einstückig ausgebildete Gehäuse ist auf rationelle Weise aus Grauguss oder aus Aluminium-Druckguss gefertigt.

Gemäß dem Patentanspruch 9 ist Gegenstand der Erfindung auch eine Werkzeugmaschine, die einen Werkzeugrevolver nach einem der Ansprüche 1 bis 8 aufweist.

Nachstehend ist die Erfindung anhand der Zeichnung im Einzelnen erläutert. Es zeigen:
- Fig. 1: einen schematisch vereinfacht gezeichneten Längsschnitt eines Ausführungsbeispiels eines Werkzeugrevolvers gemäß dem Stand der Technik;
- Fig. 2: einen Längsschnitt eines Werkzeugrevolvers gemäß einem Ausführungsbeispiel der Erfindung;
- Fig. 3: einen der Fig. 2 entsprechenden, demgegenüber um 90° verdreht gezeichneten Längsschnitt des Ausführungsbeispiels;
- Fig. 4: eine perspektivische Schrägansicht des Ausführungsbeispiels, gesehen auf die Werkzeugscheibe; und
- Fig. 5: eine perspektivische Schrägansicht des Ausführungsbeispiels, gesehen auf das Ständerteil.

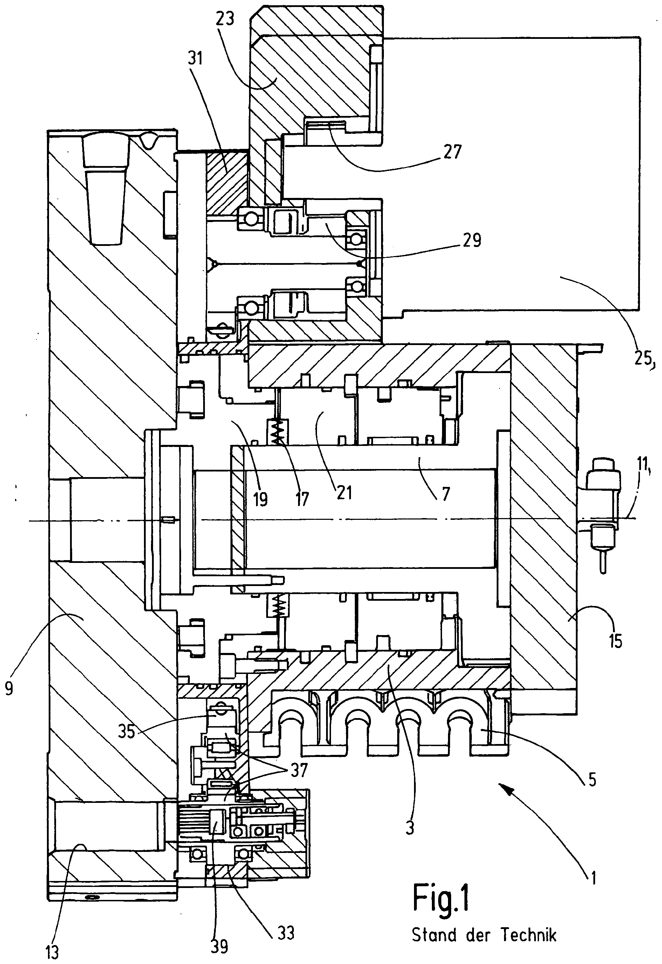

In der Fig. 1, die in vereinfachter Schnittdarstellung einen Werkzeugrevolver des Standes der Technik zeigt, ist ein Ständerteil als Ganzes mit 1 bezeichnet, das an einem Gehäusegrundkörper 3 seitlich angegossene Längsstege 5 aufweist, von denen einer sichtbar ist und die Ausnehmungen aufweisen, mittels denen das Ständerteil 1 durch Verschrauben an einer Werkzeugmaschine festlegbar ist. In der bei derartigen Werkzeugrevolvern üblichen Weise ist im Grundkörper 3 eine Schwenkwelle 7, die mit einer Werkzeugscheibe 9 verbunden ist, um eine Revolverachse 11 drehbar gelagert. Für einen zugehörigen Schwenkantrieb, mittels dessen die Werkzeugscheibe 9 durch Drehen der Schwenkwelle 7 in Schwenkpositionen einstellbar ist, bei denen eine Werkzeugstation in eine Arbeitsposition gelangt, wie es in Fig. 1 für eine mit 13 bezeichnete Werkzeugaufnahme gezeigt ist, ist am Grundkörper 3 eine Lagerplatte 15 angesetzt, auf der ein in der Fig. 1 nicht gezeigter Schwenkantrieb gelagert ist, der einen Elektromotor und eine mit der Schwenkwelle 7 in Verbindung stehende Getriebeeinrichtung aufweist. Um die Werkzeugscheibe 9 in den gewünschten Schwenkstellungen relativ zum Ständerteil 1 lösbar festzulegen, ist eine Verriegelungseinrichtung vorgesehen, die in der bei derartigen Werkzeugrevolvern üblichen Weise eine Hirth-Verzahnung 17 zwischen einem Lagerring 19 der Werkzeugscheibe 9 und einem ringförmigen Sperrkörper 21 aufweist, der im Grundkörper 3 axial verschiebbar geführt ist. Mittels einer üblichen Verschiebeeinrichtung, die vorzugsweise hydraulisch betätigt ist, ist der Sperrkörper 21 mit der Hirth-Verzahnung 17 in und außer Eingriff bringbar, um, entsprechend der mit hoher Teilung ausgeführten Hirth-Verzahnung 17, die Werkzeugscheibe 9 genau zu positionieren oder freizugeben.

Zusätzlich zu dem von der Lagerplatte 15 gebildeten Gehäuseteil ist bei den bekannten Werkzeugrevolvern als weiteres Gehäuseteil eine Motorplatte 23 vorgesehen, die den Träger für einen Elektromotor 25 bildet, der für den Antrieb des jeweiligen Bearbeitungswerkzeugs vorgesehen ist, das sich in der auf die Arbeitsposition ausgerichteten Werkzeugaufnahme 13 befindet. Innerhalb der Motorplatte 23 ist ein vom Ritzel 27 der Welle des Motors 25 angetriebenes Zahnrad 29 gelagert, das die Antriebsverbindung zu einem Getriebegehäuseteil 31 fortsetzt. Dieses bildet mit seinem dem Zahnrad 29 diametral gegenüberliegenden Gehäusebereich die Arbeitsstation 33. Innerhalb des Getriebegehäuseteils 31 ist die Getriebeverbindung vom Zahnrad 29 über einen Zahnring 35 und über Zwischenräder 37 zur Kupplung 39 in der Arbeitsstation 33 fortgesetzt. Diese ist in der bei derartigen Werkzeugrevolvern üblichen Weise so ausgebildet, dass ein in der Werkzeugaufnahme 13 befindliches Bearbeitungswerkzeug bei Einlaufen in die Arbeitsstation 33 in Eingriff mit der Kupplung 39 gelangt.

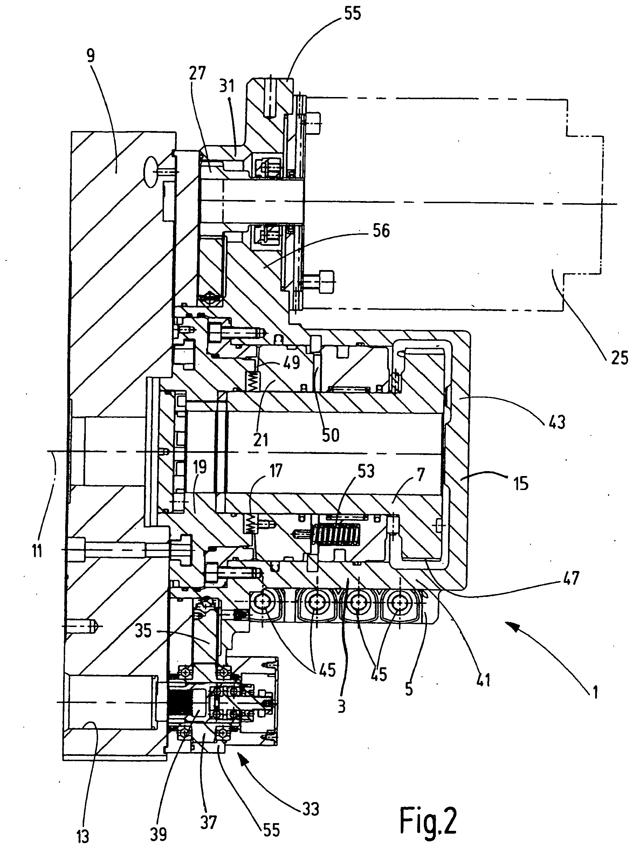

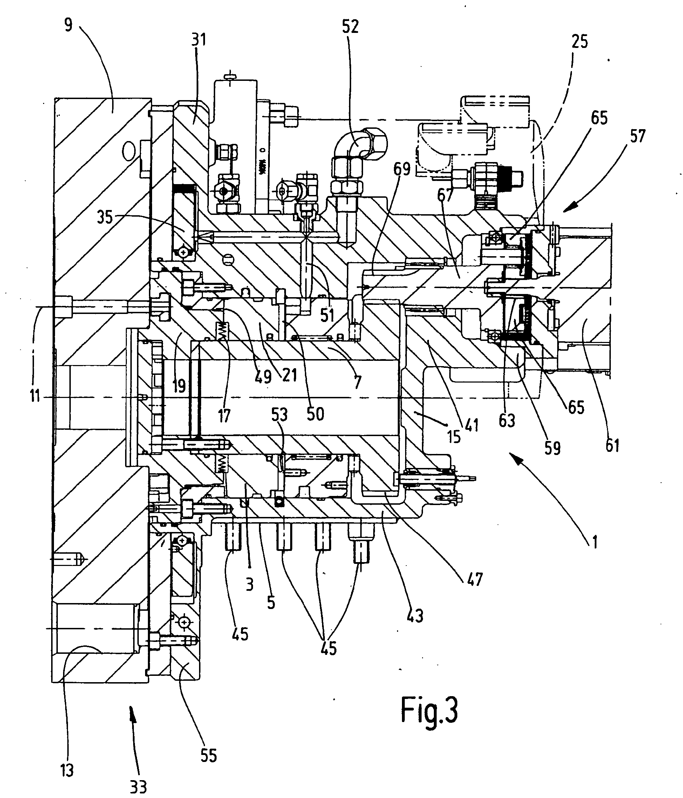

Bei dem in Fig. 2 bis 5 gezeigten Ausführungsbeispiel der Erfindung sind der Grundkörper 3, die Lagerplatte 15, die Motorplatte 23 sowie das Getriebegehäuseteil 31 zu einem Gesamtgehäuse 41 zusammengefasst. Wie am deutlichsten aus Fig. 2 zu ersehen ist, weist das Gesamtgehäuse 41 einen Gehäusetopf 43 auf, der sich entlang der Revolverachse 11 erstreckt, auf der der Werkzeugscheibe 9 zugewandten Seite offen und am anderen, hinteren Ende des Ständerteils 1 geschlossen ist. In ähnlicher Weise, wie es bei der in Fig. 1 gezeigten, bekannten Lösung seitlich des dortigen Grundkörpers 3 der Fall ist, sind seitlich entlang der Außenseite des Topfes 43 angegossene Längsstege 5 vorgesehen, in denen Ausnehmungen für Befestigungsschrauben 45 gebildet sind. Wie es bei der bekannten Lösung im Grundkörper 3 der Fall ist, ist beim erfindungsgemäßen Werkzeugrevolver eine Schwenkwelle 7 im Gehäusetopf 3 gelagert, die über einen Lagerring 19 die Schwenkstellungen der Werkzeugscheibe 9 vorgibt. Der Schwenkantrieb, der bei der in Fig. 2 gezeigten Orientierung des Ständerteils 1 nicht sichtbar ist, ist, wie die Fig. 3 zeigt, mit einem an der Schwenkwelle 7 befindlichen Zahnkranz 47 in Verbindung. Wie bei der bekannten Lösung von Fig. 1 und bei anderen vergleichbaren Werkzeugrevolvern üblich, ist auch beim gezeigten Ausführungsbeispiel eine Verriegelungseinrichtung für die Schwenkpositionen der Werkzeugscheibe 9 vorgesehen, wobei der Sperrkörper 21, der für den wahlweisen Eingriff mit der Hirth-Verzahnung 17 am Lagerring 19 der Werkzeugscheibe 9 vorgesehen ist, hydraulisch betätigbar ist. Von den Hydraulikkanälen, die zu beidseits des Sperrkörpers befindlichen Druckräumen 49 und 50 führen, ist lediglich in Fig. 3 ein Kanal 51 sichtbar, der sich an einem Anschluss 52 anschließt, der zum Hydrauliksystem der Gesamtanlage führt. Für eine Verriegelung bei nicht vorhandenem Hydraulikdruck ist eine den Sperrkörper 21 vorspannende Druckfeder 53 vorgesehen.

Das Gesamtgehäuse 41 weist in dem der Werkzeugscheibe 9 zugewandten Bereich eine flanschartige Verbreiterung 55 auf, in der das Übersetzungsgetriebe für den Antrieb der in der Arbeitsstation 33 befindlichen Kupplung 39 vorgesehen ist. Die Verbreiterung 55 übernimmt daher die Funktion des Getriebegehäuseteils 31 der in Fig. 1 gezeigten, bekannten Lösung. An dem in Fig. 2 obenliegenden Bereich der Gehäuseverbreiterung 55 ist der für den Werkzeugantrieb vorgesehene Elektromotor 25 direkt von außen aufgesetzt, die Verbreiterung 55 bildet in diesem Bereich auch eine Motorplatte 56 entsprechend der Motorplatte 23 von Fig. 1. Der in Fig. 2 untenliegend sichtbare Teil der Verbreiterung 55 enthält die der Arbeitsstation 33 zugehörigen Komponenten, wobei die Getriebeverbindung vom Ritzel 27 der Welle des Motors 25, in Entsprechung zu der Lösung von Fig. 1, über den Zahnring 35 zum Zwischenrad 37 der Kupplung 39 geführt ist.

Der mit dem Zahnkranz 47 der Schwenkwelle 7 in Getriebeverbindung stehende Schwenkantrieb 57 ist, wie in Fig. 3 gezeigt ist, unmittelbar an einer Gehäuseverlängerung 59 angebracht, die sich als einstückiges Bestandteil des Gesamtgehäuses 41, zur Revolverachse 11 seitlich versetzt, von der Rückseite des Topfes 43 weg erstreckt. Diese Gehäuseverlängerung 59 übernimmt die Funktion der Lagerplatte 15 der Lösung von Fig. 1. Wie Fig. 3 zeigt, weist der Schwenkantrieb 57 einen Elektromotor 61 auf, der mit dem Ritzel 63 seiner Motorwelle das Sonnenrad eines Planetengetriebes bildet. Die Planetenräder 65, die an der Innenverzahnung eines stationären Hohlrades umlaufen, bewirken die Drehbewegung ihres Planetenträgers 67, der am inneren Ende ein Ritzel 69 aufweist, das mit dem Zahnkranz 47 der Schwenkwelle 7 kämmt. Bei dieser Anordnung des Schwenkantriebes 57 übernimmt die Gehäuseverlängerung 59 die Funktion der Lagerplatte 15 bei der bekannten Lösung von Fig. 1.

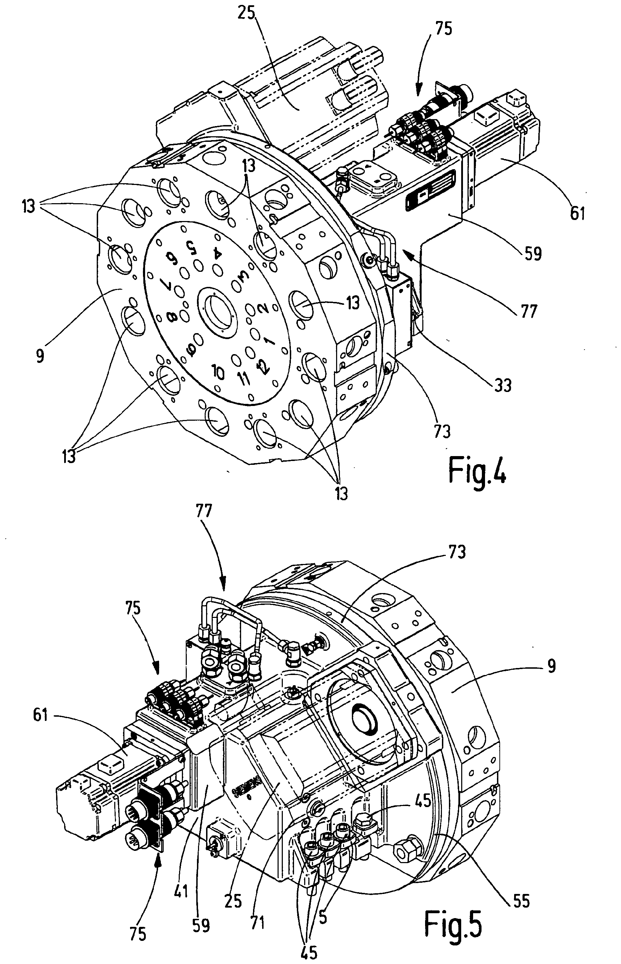

Wie die Fig. 4 und 5 zeigen, ist die Gehäuseverlängerung 59 im Querschnitt im Wesentlichen quadratisch. In der neben der Gehäuseverlängerung 59 verlaufenden Seitenwand des Gesamtgehäuses 41 ist eine eine Vertiefung bildende Längsausnehmung 71 gebildet, die sich von dem die Motorlagerung bildenden Bereich der Gehäuseverbreiterung 55 bis zum Ende der Gehäuseverlängerung 59 erstreckt und in der der Elektromotor 25 teilweise aufgenommen ist, siehe Fig. 5. Wie Fig. 4 und 5 zeigen, folgt der Außenumfang 73 der Gehäuseverbreiterung 55 im Wesentlichen der Außenkontur der Werkzeugscheibe 9. Anschlusseinrichtungen für Steuerung und Versorgung der Elektromotoren 25 und 61 sind in Fig. 4 und 5 mit 75 bezeichnet. Mit 77 sind Leitungen bezeichnet, die für die Druckmittelversorgung der Verriegelungseinrichtung und für eine nicht näher dargestellte Zufuhr von Kühlschmiermittel zur Werkzeugscheibe 9 vorgesehen sind.

## Patentansprüche

1. Werkzeugrevolver, mit einer in wahlweise Schwenkstellungen gegenüber einem Ständerteil (1) bringbaren Werkzeugscheibe (9), wobei das Ständerteil (1) zumindest aufweist:
- einen Grundkörper (3), der eine Schwenklagerung für die Werkzeugscheibe (9) beinhaltet;
- eine Lagerplatte (15), auf der ein Schwenkantrieb (57) in Form eines Elektromotors (61) für die Werkzeugscheibe (9) gelagert ist;
- ein Getriebegehäuseteil (31), das eine für einen Antrieb eines Bearbeitungswerkzeugs vorgesehene Getriebeverbindung beinhaltet; und
- eine Motorplatte (23; 56), die einen Träger für einen weiteren Elektromotor (25) bildet, der für den Antrieb des jeweiligen Bearbeitungswerkzeuges mittels der Getriebeverbindung vorgesehen ist,
**dadurch gekennzeichnet, dass** zumindest der Grundkörper (3), das Getriebegehäuseteil (31) sowie die Lagerplatte (15) und die Motorplatte (23; 56) zu einem gemeinsamen, einstückigen Gehäuse (41) zusammengefasst sind, das soweit es Teile (63, 65, 67, 69) des Antriebsstranges (7) zum Schwenken der Werkzeugscheibe (9) umfasst, in der Art eines Gehäusetopfes (43) ausgebildet ist sowie eine Verriegelungseinrichtung (17, 19, 21) zum Freigeben und Festlegen der Werkzeugscheibe (9) in definiert vorgebbaren Schwenkstellungen gegenüber dem Ständerteil (1) aufweist, und dass das einstückig ausgebildete Gehäuse (41) aus Grauguss oder aus Aluminium-Druckguss besteht.

2. Werkzeugrevolver nach einem der vorstehenden Ansprüche, **dadurch gekennzeichnet, dass** das einstückig ausgebildete Gehäuse (41) ein Übersetzungsgetriebe (35, 37) umfasst, das von einem Elek-tromotor (25) angetrieben dem rotierenden Antrieb eines Bearbeitungswerkzeugs dient, das mittels der Werkzeugscheibe (9) in eine dahingehende Arbeitsposition (33) bringbar ist.

3. Werkzeugrevolver nach einem der vorstehenden Ansprüche, **dadurch gekennzeichnet, dass** der jeweilige Elektromotor (25, 61) für das jeweilige in der Arbeitsposition (33) befindliche Bearbeitungswerkzeug und/oder für den Schwenkantrieb der Werkzeugscheibe (9) von außen direkt auf das einstückig ausgebildete Gehäuse (41) aufgesetzt ist.

4. Werkzeugrevolver nach einem der vorstehenden Ansprüche, **dadurch gekennzeichnet, dass** der Gehäusetopf (43) sich in Richtung der schwenkbaren Werkzeugscheibe (9) flanschartig verbreitert und innerhalb dieser flanschartigen Verbreiterung (55) das Übersetzungsgetriebe (35, 37) für das antreibbare Bearbeitungswerkzeug aufgenommen ist.

5. Werkzeugrevolver nach einem der vorstehenden Ansprüche, **dadurch gekennzeichnet, dass** der Gehäusetopf (43) außenumfangsseitig eine Längsausnehmung (71) aufweist, in die zumindest teilweise der Elektromotor (25) für den Antrieb des Bearbeitungswerkzeugs eingreift.

6. Werkzeugrevolver nach Anspruch 4, **dadurch gekennzeichnet, dass** die Längsausnehmung (71) des Gehäusetopfes (43) sich zwischen der einstückig mit dem Gehäuse (41) verbundenen Motorplatte (56), die an die flanschartige Verbreiterung (55) des Gehäuses (41) anschließt, und einer Austrittsstelle im Gehäuse (41) erstreckt, an die sich eine Gehäuseverlängerung (59) anschließt, die zumindest Getriebeteile (65, 67) des Antriebsstranges für die Werkzeugscheibe (9) beinhaltet.

7. Werkzeugrevolver nach nach Anspruch 6, **dadurch gekennzeichnet, dass** die flanschartige Verbreiterung (55) des einstückig ausgebildeten Gehäuses (41) im Wesentlichen kreisförmig und der Gehäusetopf (43) sowie die Gehäuseverlängerung (59) mehreckig, insbesondere in der Art eines quadratischen Vielecks, aufgebaut sind.

8. Werkzeugrevolver nach einem der vorstehenden Ansprüche, **dadurch gekennzeichnet, dass** in einer Längsausrichtung des Gehäusetopfes (43) dieser einstückig angegossene Längsstege (5) mit Ausnehmungen aufweist zum Festlegen des einstückig ausgebildeten Gehäuses (41) an Teilen einer Werkzeugmaschine.

9. Werkzeugmaschine, **dadurch gekennzeichnet, dass** sie einen Werkzeugrevolver nach einem der Ansprüche 1 bis 8 aufweist.

## Claims

1. Tool turret, with a tool disc (9) which can be brought into optional swivel positions in relation to a stand part (1), wherein the stand part (1) comprises at least:
- a main body (3),which includes a pivot bearing for the tool disc (9);
- a bearing plate (15), on which a swivel drive (57) is carried in the form of an electric motor (61) for the tool disc (9);
- a gear unit housing part (31), which includes a geared connection for a drive of a machining tool; and
- a motor plate (23; 56), which forms a support for a further electric motor (25), which is provided for driving the respective machining tool by means of the geared connection,
**characterised in that** at least main body (3), the gear unit housing part (31) and the bearing plate (15) and the motor plate (23; 56) are combined into a common, one-piece housing (41), that insofar as it comprises parts (63, 65, 67, 69) of the drive train (7) for swivelling the tool disc (9), is configured as a type of housing pot (43) as well as a locking device (17, 19, 21) for releasing and securing the tool disc (9) in defined preselectable swivel positions in relation to the stand part (1), and that the one-piece housing (41) consists of grey cast iron or aluminium pressure die casting.

2. Tool turret in accordance with one of the preceding claims, **characterised in that** the one-piece housing (41) comprises a transmission gear unit (35, 37), that is driven by an electric motor (25), serving as the the rotating drive of a machining tool, that can be brought into a working position (33) by the tool disc (9).

3. Tool turret in accordance with one of the preceding claims, **characterised in that** respective electric motor (25, 61) for the particular machining tool located in the operating position (33) and/or for the swivel drive of the tool disc (9) is mounted externally directly on the one-piece housing (41).

4. Tool turret in accordance with one of the preceding claims, **characterised in that** the housing pot (43) is widened in the direction of the swivellable tool disc (9) in a flange-like manner and the transmission gear unit (35, 37) for the drivable machine tool is housed within this flange-like widened portion (55).

5. Tool turret in accordance with one of the preceding claims, **characterised in that** housing pot (43) has a longitudinal recess (71), into which the electric motor (25) for the machining tool drive at least partially encroaches.

6. Tool turret in accordance with claim 4, **characterised in that** the longitudinal recess (71) of the housing pot (43) extends between the motor plate (56) integrally attached to the housing (41), which connects to the flange-like widening (55) of the housing (41), and an exit point in the housing (41), to which a housing extension (59) connects which contains the at least gear unit parts (65, 67) of the drive train for the tool disc (9).

7. Tool turret in accordance with claim 6, **characterised in that** the flange-like widening (55) of the one-piece housing (41) is essentially circular and the housing pot (43) together with the housing extension (59) are polygonal, in particular in the form of a quadratic polygon..

8. Tool turret in accordance with one of the preceding claims, **characterised in that** in a longitudinal direction of the housing pot (43) this has one-piece cast-on webs (5) with recesses for securing the one-piece housing (41) to parts of a machine tool,

9. Machine tool, **characterised in that** it incorporates a tool turret in accordance with one of the claims 1 to 8.

## Revendications

1. Tourelle revolver, ayant un disque (9) à outil pouvant être mis au choix en des positions de pivotement par rapport à une partie (1) formant bâti, la partie (1) formant bâti ayant au moins :
- un corps (3) de base, qui comporte un montage à pivotement du disque (9) à outil ;
- une plaque (15) de montage, sur laquelle est monté un entraînement (57) en pivotement sous la forme d'un moteur (61 électrique pour le disque (9) à outil ;
- une partie (31) formant carter de transmission, qui comporte une transmission prévue pour un entraînement d'un outil d'usinage et
- une plaque (23; 56) de moteur, qui forme un support pour un autre moteur (25) électrique, lequel est prévu pour l'entraînement de l'outil d'usinage respectif au moyen de la transmission,
**caractérisée en ce qu'**au moins le corps (3) de base, la partie (31) formant carter de la transmission, ainsi que la plaque (15) de montage et la plaque (23; 56) de moteur sont rassemblés en une enveloppe (41) commune d'une seule pièce, qui comprend, dans cette mesure, des parties (63, 65, 67, 69) de la chaîne (7) cinématique pour faire pivoter le disque (9) à outil, qui est constituée à la manière d'un pot (43) formant enveloppe et qui a un dispositif (17, 19, 21) de verrouillage pour libérer et fixer le disque (9) à outil en des positions de pivotement pouvant être données à l'avance de manière définie par rapport à la partie (1) formant bâti, et **en ce que** l'enveloppe (41) constituée d'une seule pièce est en fonte ou en pièce coulée sous pression en aluminium.

2. Tourelle revolver suivant l'une des revendications précédentes, **caractérisée en ce que** l'enveloppe (41) constituée d'une seule pièce comprend une transmission (35, 37), qui, entraînée par un moteur (25) électrique, sert à l'entraînement en rotation d'un outil d'usinage, lequel peut être mis en une position (33) de travail au moyen du disque (9) à outil.

3. Tourelle revolver suivant l'une des revendications précédentes, **caractérisée en ce que** le moteur (25, 61) électrique respectif pour l'outil d'usinage respectif se trouvant dans la position (33) de travail et/ou pour l'entraînement en pivotement du disque (9) à outil est mis directement de l'extérieur sur l'enveloppe (41) constituée d'une seule pièce.

4. Tourelle revolver suivant l'une des revendications précédentes, **caractérisée en ce que** le pot formant enveloppe s'élargit à la manière d'une bride dans la direction du disque (9) à outil pivotant et la transmission (35, 37) pour l'outil d'usinage à entraîner est reçue dans cet élargissement (55) à la manière d'une bride.

5. Tourelle revolver suivant l'une des revendications précédentes, **caractérisée en ce que** le pot (43) formant enveloppe a, du côté du pourtour extérieur, un évidement (71) longitudinal, dans lequel pénètre, au moins en partie, le moteur (25) électrique d'entraînement de l'outil d'usinage.

6. Tourelle révolver suivant la revendication 4, **caractérisée en ce que** l'évidement (71) longitudinal du pot (43) de l'enveloppe s'étend entre la plaque (56) du moteur, qui est reliée d'une pièce à l'enveloppe (41) et qui se raccorde à l'élargissement (55) à la manière d'une bride de l'enveloppe (41), et un point de sortie de l'enveloppe (41), où se raccorde un prolongement (59) de l'enveloppe, qui comporte au moins des parties (65, 67) de transmission de la chaîne cinématique pour le disque (9) à outil.

7. Tourelle révolver suivant la revendication 6, **caractérisée en ce que** l'élargissement (55) à la manière d'une bride de l'enveloppe (41) constituée d'une seule pièce est sensiblement circulaire et le pot (43) de l'enveloppe, ainsi que le prolongement (59) de l'enveloppe, sont constitués de manière polygonale, notamment à la manière d'un carré.

8. Tourelle revolver suivant l'une des revendications précédentes, **caractérisée en ce que**, dans une direction longitudinale du pot (43) de l'enveloppe, celui-ci a des nervures (5) longitudinales coulées d'une seule pièce ayant des évidements pour fixer l'enveloppe (41) constituée d'une seule pièce à des parties d'une machine-outil.

9. Machine-outil, **caractérisée en ce qu'**elle a une tourelle revolver suivant l'une des revendications 1 à 8.
